# EUROPEAN PATENT APPLICATION

(11) **EP 2 803 849 A1**
(43) Date of publication of application: **19.11.2014**
(21) Application number: 12865239.3
(22) Date of filing: 21.12.2012
(51) Int. Cl.: F02M 39/02, F16F 15/10

(54) **VISCOUS DAMPER ATTACHMENT STRUCTURE FOR SUPPLY PUMP OF COMMON RAIL FUEL INJECTION DEVICE**

(30) Priority: 10.01.2012 JP 2012002463
(71) Applicant: Daimler AG, 70327 Stuttgart (DE)
(72) Inventor: SUZUKI, Kyoichi, Kawasaki-shi, Kanagawa 212-0058 (JP)
(74) Representative: Hofstetter, Schurack & Partner
(86) International application number: PCT/JP2012/083263
(87) International publication number: WO 2013/105419

(57) **Abstract**

A viscous damper mounting structure for a supply pump of a common-rail fuel injection device that can minimize shape modifications on the engine side and changes in the supply pump shape or the like, enables the installation of a damper device on the drive shaft of a supply pump, and reduces the drive noise of the supply pump. The mounting structure includes a supply pump 2 that supplies a high-pressure fuel into an accumulator 3 of the common-rail fuel injection device, a supply pump gear 22 that is fixed by a fastening member to a supply pump camshaft 21 that drives the supply pump 2 via a gear train fitted with the supply pump 2 and connected to a crankshaft, a viscous damper 5 that inhibits rotation fluctuations of the supply pump gear 22, and a damper adapter 6 interposed between the viscous damper 5 and the supply pump gear 22.

## Description

### BACKGROUND OF THE INVENTION

### 1. Field of the Invention

The present invention relates to a mounting structure of a damper device that is mounted on a supply pump of a common-rail fuel injection device.

### 2. Description of the Related Art

Exhaust systems of diesel engines (referred to hereinbelow as "engines") installed on automobiles include diesel particulate matter (referred to hereinbelow as "PM") and NOx (nitrogen oxides), which are hazardous substances contained in exhaust gas released from the engines.

Common-rail fuel injection devices (referred to hereinbelow as "CRS devices") are widely used to suppress the generation of such hazardous substances by atomizing the fuel by a high fuel injection pressure and burning the atomized fuel.

A drive torque in a supply pump of the CRS device is less than that in the conventional serial injection pump. Therefore, the gear drive noise in the supply pump is reduced.

However, the supply pump structure of the CRS device is a two cylinder - four cam structure (a structure in which two cams are installed at one cylinder). Because of a gear train coupled to the crankshaft, in the case of a four-stroke engine, the supply pimp makes three revolutions per two revolutions of the engine (actual number of revolutions depends on the discharge amount of the supply pump).

Therefore, the number of discharge cycles of the supply pump is twelve per two revolutions of the engine. In this case, the load acting upon the supply pimp abruptly decreases immediately after the fuel has been ejected. Therefore, a speed-increasing torque (negative torque) is instantaneously generated at the supply pump shaft and the level of noise increases.

A technique for inhibiting rotation fluctuations of the drive shaft of a fuel injection pump is disclosed in Japanese Utility Model Application Publication No. H5-47420.

According to Japanese Utility Model Application Publication No. H5-47420, engine revolution is transmitted by an appropriate gear train to a fuel pump gear, and then transmitted from an input unit by a damper coupling to the drive unit of a fuel injection pump, thereby causing the drive unit to rotate.

Torsional vibrations of the drive shaft of the fuel injection pump are inhibited by setting to appropriate values the characteristic parameters of the inertia system, spring system, and damper system of the damper coupling.

However, with the technique disclosed in Japanese Utility Model Application Publication No. H5-47420, a damper coupling is interposed between the drive shaft of the fuel injection pump body and the shaft supporting the drive gear that is connected to (meshed with) the gear train, and a relative displacement occurs between the two shafts.

Further, the following inconveniences result from such installation of damper devices at the drive shafts of supply pumps of common-rail fuel injection devices that are presently used. Thus, shape modifications on the engine side and changes in the supply pump shape or the like should be performed, the level of specialization of parts increases, and the cost of the damper and other components rises.

### SUMMARY OF THE INVENTION

In order to resolve the above-described problems, it is an object of the present invention to minimize shape modifications on the engine side and changes in the supply pump shape or the like, enable the installation of a damper device on the drive shaft of a supply pump, and reduce the drive noise of the supply pump.

In order to attain the above-described object, the present invention provides a viscous damper mounting structure for a supply pump of a common-rail fuel injection device of a diesel engine, including:
a supply pump that supplies a high-pressure fuel into an accumulator of the common-rail fuel injection device;
a supply pump gear that is fixed by a fastening member to a supply pump camshaft that drives the supply pump via a gear train connected to a crankshaft of the diesel engine;
a viscous damper that inhibits rotation fluctuations of the supply pump gear; and
a damper adapter interposed between the viscous damper and the supply pump gear.

According to the present invention, by providing the viscous damper at the supply pump gear, it is possible to inhibit the rotation fluctuations of the supply pump gear and the gear train from the crankshaft, cancel the negative torque (torque increasing the speed of the pump shaft) generated as the pump is driven, and prevent the teeth of the supply pump gear from separating from the teeth (idle gear) of the gear train, thereby reducing the drive noise of these components.

In accordance with the present invention, it is preferred that in the viscous damper mounting structure for a supply pump of a common-rail fuel injection device according to claim 1, the fastening member could be accommodated by an annular protruding portion, provided on a damper adapter side of the supply pump gear so that a gap is present between an inner circumferential surface of the annular protruding portion and an outer circumferential portion of the fastening member, and a recess provided on a supply pump gear side of the damper adapter and having an inner circumferential diameter substantially equal to that of the inner circumferential surface of the annular protruding portion.

In accordance with such invention, the fastening member is accommodated by the annular protruding portion of the supply pump gear and the recess of the damper adapter. Therefore, the axial size of the damper adapter that is attached to the supply pump camshaft can be reduced and the viscous damper that is mounted on the damper adapter can be increased in size within a restricted space.

Further, in accordance with the present invention, it is preferred that the viscous damper mounting structure for a supply pump of a common-rail fuel injection device according to claim 1 or 2 have a round-disk-like protruding portion, provided on a viscous damper side of the damper adapter along an axial line of the damper adapter and having an axial line coinciding with the axial line, and a recess provided in a center portion of the viscous damper, and having a center line coinciding with the axial line, and moreover shaped so that the round-disk-like protruding portion can be fitted therein, and the recess be mated with the protruding portion and fastened thereto.

In accordance with such invention, a structure is obtained in which the round disk-like protruding portion of the damper adapter and the recess in the central portion of the viscous damper are mated and fastened together. Therefore, the axial size of the damper adapter that is attached to the supply pump camshaft can be reduced and the viscous damper that is mounted on the damper adapter can be increased in size within a restricted space.

Further, in accordance with the present invention, the damper adapter may be directly mounted on the supply pump gear by a fastening member.

In accordance with such invention, a structure is obtained in which the damper adapter is mounted on the supply pump gear and the viscous damper is mounted by using the damper adapter. Therefore, the viscous damper can be mounted in a narrow space.

Further, in accordance with the present invention, rotation balance adjustment of the damper adapter may be performed by rotation about a rotation axial line of the supply pump gear.

Further, in accordance with the present invention, since the rotation balance of the damper adapter is adjusted, a stable rotation inertia force of the damper adapter can be expected and the effect of inhibiting the rotation fluctuations of the viscous damper can be increased.

Thus, by providing the viscous damper at the supply pump gear, it is possible to inhibit the rotation fluctuations of the supply pump gear and the gear train from the crankshaft, cancel the negative torque (torque increasing the speed of the pump shaft) generated as the pump is driven, and prevent the teeth of the supply pump gear from separating from the teeth (idle gear) of the gear train, thereby reducing the drive noise of these components. Further, since the fastening member is accommodated by the annular protruding portion of the supply pump gear and the recess of the damper adapter and a structure is obtained in which the round disk-like protruding portion of the damper adapter and the recess in the central portion of the viscous damper are mated and fastened together, the axial size of the damper adapter that is attached to the supply pump camshaft can be reduced and the viscous damper that is mounted on the damper adapter can be increased in size.

### BRIEF DESCRIPTION OF THE DRAWINGS

- Fig. 1: is a schematic system diagram of the common-rail fuel injection device in which the present invention is implemented;
- Fig. 2: is a side view illustrating how the supply pump in which the present invention is implemented is installed on the engine;
- Fig. 3: is a view along the Z arrow in FIG. 2; and
- Fig. 4: is a sectional view taken along the A-A line in FIG. 3.

### DESCRIPTION OF THE PREFFERRED EMBODIMENTS

The present invention will be described below in greater detail by using embodiments thereof illustrated by the appended drawings. The dimensions, materials, shapes, and mutual arrangement of constituent parts described in the embodiments are not intended to limit the scope of the invention, unless specifically described as such, and are merely illustrative examples.

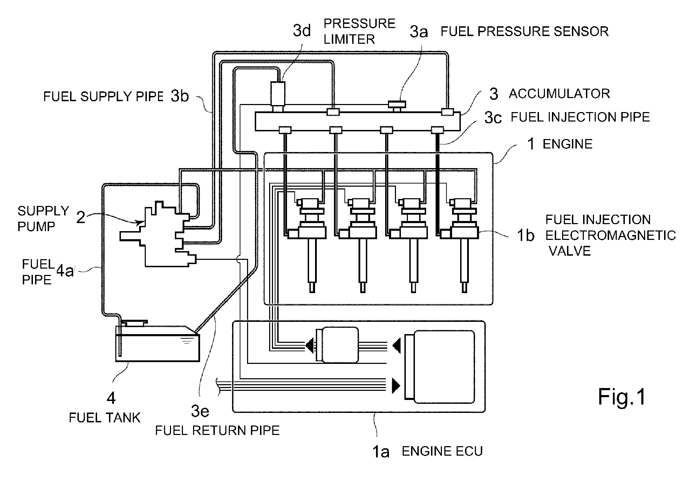

FIG. 1 is a schematic system diagram of the common-rail fuel injector in which the present invention is implemented. In the figure, the reference numeral 1 stands for an engine which is provided with a fuel injection electromagnetic valve 1 b with a distal end portion (injection nozzle portion) adjacent to a combustion chamber (not shown in the figure) of the engine 1.

The fuel injection electromagnetic valve 1 b is connected by a fuel injection pipe 3c of an accumulator 3 and supplies a high-pressure fuel.

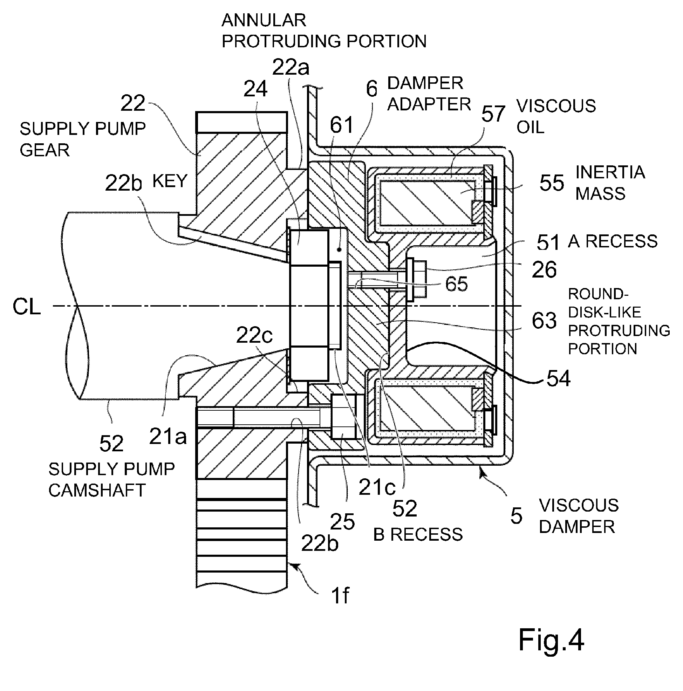

The reference numeral 2 stands for a supply pump in which the present invention is implemented. The supply pump is driven by a gear train 1f (see FIG. 4) connected to a crankshaft (not shown in the figure) of the engine 1 and introduces the fuel from a fuel tank 4 into a fuel pipe 4a. The introduced fuel is pressurized and supplied via a fuel supply pipe 3b to the accumulator 3.

The accumulator 3 is provided with a fuel pressure sensor 3a that checks the fuel pressure in the accumulator 3 and a pressure limiter 3d that returns the fuel to the fuel tank 4 when the fuel pressure exceeds a predetermined value.

When a signal is sent from an engine ECU 1 a to the fuel injection electromagnetic valve 1 b, an electromagnetic valve accommodated in the fuel injection electromagnetic valve 1 b is driven and the fuel is injected into the combustion chamber of the engine 1 according to the engine operation state. The reference numeral 3e stands for a fuel return pipe that returns the excess fuel from the fuel injection electromagnetic valve 1b, pressure limiter 3d, and supply pump 2 to the fuel tank 4.

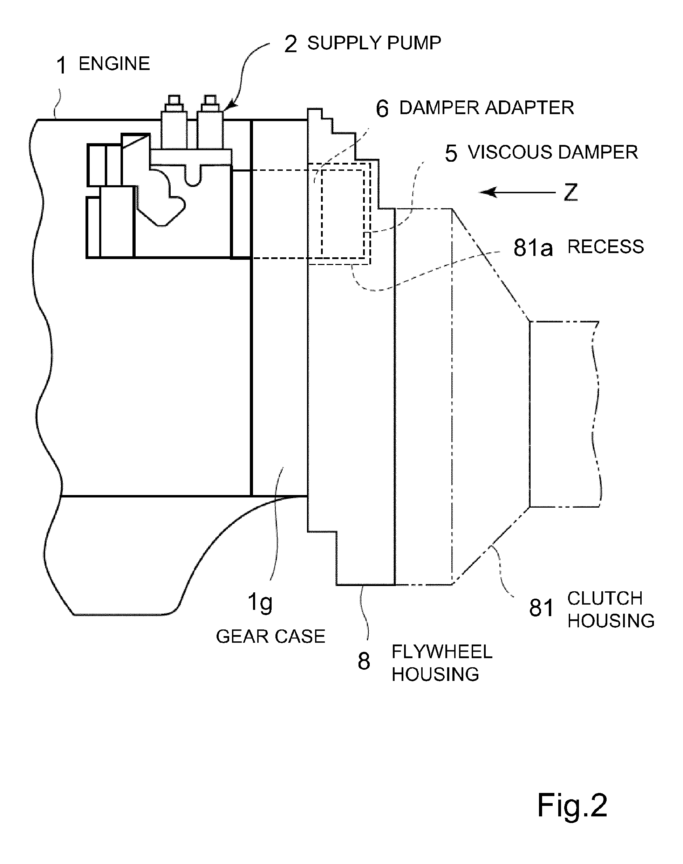

FIG. 2 is a side view illustrating how the supply pump in which the present invention is implemented is installed on the engine.

The supply pump 2 is attached to the rear end portion of the engine 1 and positioned on the front side of a gear case 1 g in which a gear train 1f is accommodated.

A flywheel housing 8 in which a flywheel of the engine 1 is accommodated is fastened by a bolt (not shown in the figure), which is a fastening member, to the rear side of the gear case 1g.

Further, a clutch housing 81 is connected that accommodates a clutch device that connects and disconnects the drive of the engine 1.

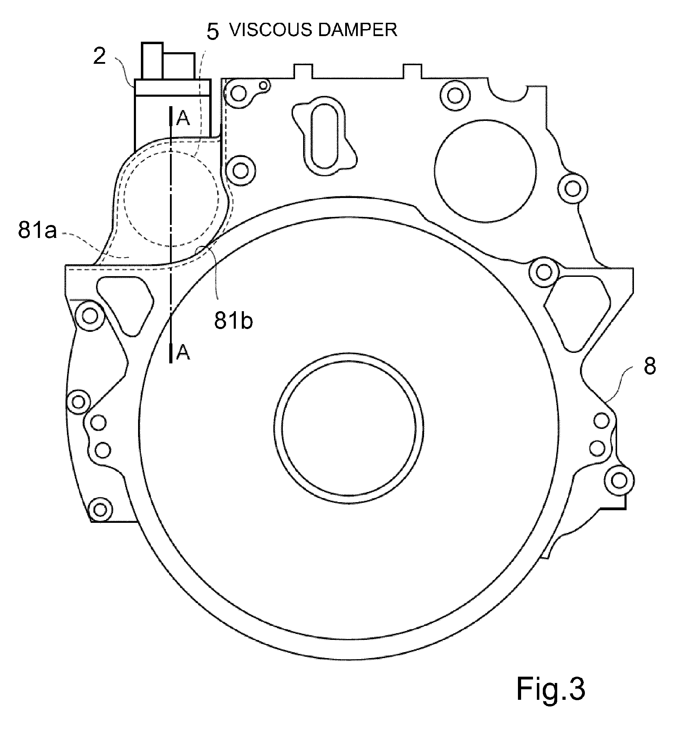

FIG. 3 is a view taken along the arrow Z in FIG. 2. A viscous damper 5 is accommodated in a recess 81 a of the flywheel housing 8.

As shown in FIG. 4, in the supply pump 2, a supply pump camshaft 21 that drives a pump unit (not shown in the figure), which pumps the oil under a high pressure, protrudes rearward (flywheel housing 8 side). The rear end portion of the supply pump camshaft 21 has formed therein a tapered portion 21 a that is tapered toward the rear end and a threaded portion 21 c positioned at the end of the tapered portion 21 a.

The supply pump gear 22 is fitted with a key 21 b onto the tapered portion 21 a. The supply pump gear 22 is fastened in the direction of the axial line CL of the supply pump camshaft 21 by a nut 24, which is screwed onto the threaded portion 21 c, and fixed to prevent relative displacement of the supply pump gear 22 and the supply pump camshaft 21.

The gear train 1f connected to a crank shaft (not shown in the figure) of the engine is accommodated inside the gear case 1 g.

The supply pump gear 22 is meshed with the gear train 1f and driven by the drive force of the engine 1.

An annular protruding portion 22a is formed at the surface of the supply pump gear 22 on the flywheel housing 8 side so that a gap is present between an inner circumferential surface 22c of the annular protruding portion and the outer circumference of the nut 24, which is a fastening member. A plurality of female threads 22b for mounting the below-described damper adapter 6 on the annular protruding portion 22a is formed along the axial line direction of the supply pump gear 22.

The damper adapter 6 is interposed between the viscous damper 5 and the supply pump gear 22 in order to mount the viscous damper 5 on the supply pump gear 22.

The damper adapter 6 has a recess 61 on the supply pump gear 22 side, which is one end side thereof. The recess has a diameter substantially equal to that of the inner circumferential surface 22c of the annular protruding portion 22a and can accommodate the nut 24 and also the threaded portion 21 of the supply pump camshaft 21.

The center axial line CL of the recess 61 coincides with the axial line of the supply pump camshaft 21.

A round disk-like protruding portion 63 is formed at the side of the damper adapter 6 surface (other end side) that is opposite that of the supply pump gear 22.

A female thread 65 for mounting the viscous adapter 5 is formed in the protruding portion 63 along the center axial line CL direction of the recess 61.

Rotation balance adjustment of the damper adapter 6 is performed by rotation about the center axial line CL.

As a result, the inertia force of the damper adapter 6 can be expected to demonstrate an effect of inhibiting rotation fluctuations of the supply pump gear 22.

The viscous damper 5 is fastened by a bolt 26 to the other end side of the damper adapter 6.

The viscous adapter 5 as a whole has a cylindrical shape, and an A recess 51 and a B recess 52 are formed from both ends thereof toward the center in the direction of the axial line CL along an axial line CL (identical to the axial line CL of the supply pump camshaft) of the cylindrical shape.

A partition wall 54 is formed between the A recess 51 and the B recess 52.

An inertia mass 55 and a viscous oil 57 are introduced in a sealed state into an annular tubular portion formed on the outer periphery of the A recess 51 and the B recess 52.

Further, the round disk-like protruding portion 63 of the damper adapter 6 is also fitted into the B recess 52, and the viscous damper 6 is fastened by fastening the round disk-like protruding portion 63 and the partition wall 54 together by screwing the fastening bolt 26 into the female thread 65.

With such a structure, the end portion of the supply pump camshaft 21 is accommodated by the recess 61 of the damper adapter 6 and the annular protruding portion 22a of the supply pump gear 22, and the size of the damper adapter 6 in the direction of the axial line CL is reduced.

Further, by fitting and attaching the round disk-like protruding portion 63 located on the other end side of the damper adapter 6 to the B recess 52 of the viscous damper 6, it is possible to ensure the female thread depth in the round disk-like protruding portion 63 (ensure the strength of this portion) and further reduce the size of the damper adapter 6 in the direction of the axial line CL.

Since the partition wall 54 and the top surface of the round disk-like protruding portion 63 are taken as the surfaces for mounting the viscous damper 6 on the damper adapter 6, the length of the tubular portion in the direction of axial line CL can be increased and the inertia mass 55 can be accordingly increased (to a degree corresponding to the protruding amount of the round disk-like protruding portion 63).

Summarizing, the length of the supply pump camshaft 21 in the direction of axial line CL can be reduced by using the recess and protruding portion and the length of the inertia mass in the direction of axial line CL can be ensured, thereby making it possible to obtain the necessary damper function despite the reduced external dimensions.

As a result, the viscous damper can be attached without changing the flywheel housing 8.

Further, in the present embodiment, the viscous damper 5 is attached to the flywheel pump camshaft 21. Therefore, when a pump load decreases, the speed-increasing torque is generated at the supply pump camshaft 21, but the speed increase is inhibited by the viscous resistance of the viscous damper 5, the tooth surface of the supply pump gear 22 is prevented from separating from the tooth surface of the gear train 1 f, and both the gear knocking noise and the meshing noise of the supply pump gear 22 are reduced.

The present invention can be used for noise reduction in damper devices mounted on the supply pumps of common-rail fuel injection devices.

## Claims

1. A viscous damper mounting structure for a supply pump of a common-rail fuel injection device of a diesel engine,the structure comprising:
a supply pump that supplies a high-pressure fuel into an accumulator of the common-rail fuel injection device;
a supply pump gear that is fixed by a fastening member to a supply pump camshaft that drives the supply pump via a gear train connected to a crankshaft of the diesel engine;
a viscous damper that inhibits rotation fluctuations of the supply pump gear; and
a damper adapter interposed between the viscous damper and the supply pump gear.

2. The viscous damper mounting structure for a supply pump of a common-rail fuel injection device according to claim 1, wherein
the fastening member can be accommodated by an annular protruding portion, provided on a damper adapter side of the supply pump gear so that a gap is present between an inner circumferential surface of the annular protruding portion and an outer circumferential portion of the fastening member, and a recess provided on a supply pump gear side of the damper adapter and having an inner circumferential diameter substantially equal to that of the inner circumferential surface of the annular protruding portion.

3. The viscous damper mounting structure for a supply pump of a common-rail fuel injection device according to claim 1 or 2,
the structure having a round-disk-like protruding portion, provided on the viscous damper side of the damper adapter along an axial line of the damper adapter and having an axial line coinciding with the axial line, and a recess provided in a center portion of the viscous damper and having a center line coinciding with the axial line, and moreover shaped so that the round-disk-like protruding portion can be fitted therein, and the recess is mated with the protruding portion and fastened thereto.

4. The viscous damper mounting structure for a supply pump of a common-rail fuel injection device according to claim 1, wherein
the damper adapter is directly mounted on the supply pump gear by a fastening member.

5. The viscous damper mounting structure for a supply pump of a common-rail fuel injection device according to claim 1 or 2, wherein
rotation balance adjustment of the damper adapter is performed by rotation about a rotation axial line of the supply pump gear.
